# FASCICULE DE BREVET EUROPEEN

(11) **EP 3 111 077 B1**
(45) Date de publication et mention de la délivrance du brevet: **31.01.2018**
(21) Numéro de dépôt: 15709282.6
(22) Date de dépôt: 19.02.2015
(51) Int. Cl.: F02K 3/06, F02C 7/04, F02C 7/14, B64C 11/14

(54) **ROTOR DE SOUFFLANTE POUR UNE TURBOMACHINE TELLE QU'UN TURBORÉACTEUR MULTIFLUX ENTRAÎNÉ PAR RÉDUCTEUR**
LÜFTERRAD FÜR EINE TURBOMASCHINE WIE ETWA EIN MEHRSTROM-TURBOSTRAHLTRIEBWERK MIT UNTERSETZUNGSGETRIEBE
FAN ROTOR FOR A TURBO MACHINE SUCH AS A MULTIPLE FLOW TURBOJET ENGINE DRIVEN BY A REDUCTION GEAR

(30) Priorité: 28.02.2014 FR 1451626
(43) Date de publication de la demande: 04.01.2017
(73) Titulaire: Safran Aircraft Engines, 75015 Paris (FR)
(72) Inventeur: VESSOT, Christian, F-77550 Moissy-Cramayel cedex (FR); LEYKO, Matthieu, F-77550 Moissy-Cramayel cedex (FR)
(74) Mandataire: Gevers & Orès
(86) Numéro de dépôt international: PCT/FR2015/050407
(87) Numéro de publication internationale: WO 2015/128563

(56) Documents cités:
- US-A- 3 942 911
- US-A- 4 722 666
- US-A1- 2006 102 780
- US-A1- 2013 259 687

## Description

### DOMAINE TECHNIQUE DE L'INVENTION

Le domaine de la présente invention est celui des turbomachines aéronautiques et, plus particulièrement celui des turboréacteurs multi-flux ou des turbopropulseurs, comportant un réducteur pour l'entraînement de la soufflante, ou respectivement de l'hélice.

### ARRIERE PLAN TECHNIQUE DE L'INVENTION

Classiquement, les turbomachines comprennent tout d'abord, en partant de l'amont, un ou plusieurs modules de compresseur disposés en série, qui compriment de l'air aspiré dans une entrée d'air. L'air est ensuite introduit dans une chambre de combustion où il est mélangé à un carburant et brûlé. Les gaz de combustion passent à travers un ou plusieurs modules de turbine qui entraînent le ou les compresseurs. Les gaz sont enfin éjectés soit dans une tuyère pour produire une force de propulsion soit sur une turbine libre pour produire de la puissance qui est récupérée sur un arbre de transmission.

Les turboréacteurs double flux actuels à fort taux de dilution, ou turbofans, comportent un rotor de soufflante et plusieurs étages de compresseur, notamment un compresseur basse pression (BP), et un compresseur haute pression (HP) qui appartiennent au corps primaire du moteur. En amont du compresseur basse pression est disposée une roue d'aubes mobiles de grande dimension, ou soufflante, qui alimente à la fois une veine primaire en flux primaire traversant les compresseurs BP et HP et une veine secondaire en flux froid, ou flux secondaire, qui est dirigé directement vers une tuyère de flux froid, dite tuyère secondaire. La soufflante est entraînée par l'arbre de rotation du corps BP et tourne généralement à la même vitesse que lui. Il peut cependant être intéressant de faire tourner la soufflante à une vitesse de rotation inférieure à celle de l'arbre BP, notamment lorsque celle-ci est de très grande dimension, dans le but de mieux l'adapter aérodynamiquement. Pour cela on dispose un réducteur entre l'arbre BP et un arbre fan, qui est porteur de la soufflante. Une telle configuration est notamment décrite dans les demandes de brevet FR 20120051655 et 20120051656 déposées le 23 février 2012.

Le turboréacteur à réducteur de vitesse présente donc des avantages évidents mais certaines difficultés doivent encore être surmontées.

En particulier, ce réducteur doit être lubrifié et refroidi pour assurer son fonctionnement correct sans être endommagé. On estime aujourd'hui que la quantité d'huile nécessaire pour assurer le fonctionnement d'un turboréacteur équipé d'un réducteur de vitesse est deux fois plus importante que dans le cas d'un turboréacteur sans réducteur de vitesse. Cette huile permet notamment de remplir les fonctions de lubrification et de refroidissement des composants mobiles de la turbomachine.

Il est connu de refroidir cette huile au moyen d'un échangeur air/huile surfacique, aussi connu sous l'appellation "SACOC", acronyme du terme anglais "Surface Air-Cooled Oil-Cooler". La surface d'échange est généralement formée dans une conduite de circulation d'air du turboréacteur. Dans cet échangeur sont ménagés une multitude de canaux dans lesquels circule l'huile à refroidir. L'échange de chaleur est effectué par conduction thermique à travers les parois des canaux. Ainsi, l'air et l'huile ne sont pas mélangés.

Dans les échangeurs de chaleur connus, l'échangeur de chaleur est agencé dans la veine secondaire du turboréacteur, en aval de la soufflante. Dans les turboréacteurs conçus sans réducteur de vitesse, le débit d'air requis pour refroidir l'huile est suffisamment faible pour ne pas provoquer de pertes de charge sensibles dans la veine secondaire.

Cependant, les turboréacteurs équipés d'un réducteur de vitesse requièrent un débit d'air bien supérieur, par exemple deux fois supérieur au débit d'air d'un turboréacteur sans réducteur de vitesse.

On connaît le document FR-B1-2.965.299 relatif à la lubrification de paliers à roulements, dans lequel l'huile est contenue dans des enceintes de lubrification maintenues en surpression par rapport aux cavités environnantes pour garantir la conservation de l'huile à l'intérieur des enceintes de lubrification. Cette surpression est réalisée par injection d'air comprimé dans l'enceinte. Cet air comprimé permet aussi de réaliser un brouillard d'huile permettant une répartition homogène de l'huile sur les composants de la turbomachine à lubrifier. Pour éviter que l'air comprimé ne présente une température trop élevée pour permettre un refroidissement efficace des composants, ce document propose de prélever l'air en amont de la soufflante.

Néanmoins, l'air prélevé n'est pas suffisamment froid pour assurer à lui seul un refroidissement efficace de l'huile de lubrification et de refroidissement. En outre, l'air est aspiré dans les enceintes d'huile au moyen d'une pompe à jet nécessitant de prélever de l'air dans la veine primaire. Le fonctionnement d'un tel dispositif est donc susceptible de perturber l'écoulement d'air dans la veine primaire, notamment lorsque la quantité d'air à prélever est importante.

On connaît également le document US-A-4.722.666, qui décrit et représente un dispositif de refroidissement de l'huile de lubrification d'un réducteur d'une turbomachine. Ce dispositif comporte un rotor de soufflante monté rotatif autour d'un axe de rotation qui comporte un moyeu et un cône, monté en amont du moyeu, dans lequel est formé un orifice de prélèvement d'air qui débouche dans une conduite d'air qui alimente une pompe d'entraînement de l'air, mue par le moteur, destinée à alimenter un échangeur dans lequel circule l'huile du réducteur.

L'air prélevé à la surface du cône par cet orifice et ce conduit l'est avec un débit insuffisant pour assurer un approvisionnement suffisant de l'échangeur, de sorte qu'il est nécessaire de pomper cet air à l'aide d'une pompe mécanique, qui prélève par conséquent une partie de la puissance de la turbomachine.

L'invention remédie à cet inconvénient en proposant un rotor de soufflante de turbomachine comportant des moyens améliorés de prélèvement de l'air en amont de la soufflante.

### BREF RESUME DE L'INVENTION

Ainsi, pour résoudre ces problèmes, l'invention propose un rotor de soufflante de turbomachine destiné à être monté rotatif autour d'un axe de rotation, le rotor comportant :
- un moyeu, et
- un cône monté en amont du moyeu ;
le cône comportant un orifice de prélèvement d'air qui débouche dans une conduite d'air dont un tronçon d'extrémité amont comprend des moyens mécaniques d'entraînement de l'air,
caractérisé en ce que l'orifice de prélèvement d'air présente une forme annulaire coaxiale à l'axe de rotation du rotor de soufflante, le cône étant divisé par l'orifice de prélèvement en un tronçon sommital avant et en un tronçon tronconique arrière.

Selon l'invention, les moyens d'entraînement permettent d'entraîner de l'air dans la conduite d'air, par exemple à la manière d'une écope. Elles peuvent être configurées pour induire une giration du flux d'air entrant dans la conduite.

Selon d'autres caractéristiques du rotor de soufflante :
- le tronçon sommital est fixé avec le tronçon tronconique du cône par les aubes, ces dernières assurant ainsi la liaison entre ces tronçons du cône, les aubes ayant donc un rôle structurel. Le tronçon sommital permet de dévier des corps étrangers susceptibles de venir impacter ce tronçon en vol ;
- le tronçon d'extrémité amont de la conduite d'air présente une section de forme annulaire coaxiale à l'axe de rotation du rotor de soufflante, une couronne d'aubes radiales étant interposée dans le tronçon d'extrémité amont, les aubes étant solidaires en rotation avec le moyeu ;
- la couronne d'aubes est disposée dans ledit cône ;
- la conduite d'air est centrée sur l'axe de rotation du rotor,

L'invention concerne aussi un corps axial amont d'une turbomachine, notamment un turboréacteur multi flux, comportant un rotor de soufflante du type décrit précédemment, et au moins un tronçon d'un arbre de compresseur, en particulier l'arbre de compresseur basse pression, caractérisé en ce que la conduite d'air se prolonge dans le corps axial amont au-delà du rotor, la conduite d'air comportant au moins une paroi de refroidissement d'huile qui est destinée à refroidir de l'huile par échange de chaleur à travers ladite paroi avec le flux d'air circulant dans la conduite d'air.

Selon d'autres caractéristiques du corps axial amont :
- la paroi de refroidissement est située en aval des moyens mécaniques d'entraînement de l'air ;
- le couple de rotation de l'arbre de compresseur est transmis au rotor de la soufflante par l'intermédiaire d'un réducteur de vitesse, le réducteur de vitesse étant lubrifié par de l'huile refroidie au contact de ladite paroi de refroidissement ;

L'invention concerne enfin une turbomachine comportant un corps axial amont du type décrit précédemment, et au moins un arbre central creux, le flux d'air circulant dans la conduite d'air étant évacué vers l'aval dans cet arbre central creux.

Ainsi, la conduite d'air est centrée sur l'axe de rotation du corps et elle présente un axe globalement rectiligne parallèle à l'axe de rotation du corps. La conduite d'air est donc alimentée en air exclusivement par l'orifice annulaire de prélèvement.

### BREVE DESCRIPTION DES FIGURES

D'autres caractéristiques et avantages de l'invention apparaîtront au cours de la lecture de la description détaillée qui va suivre pour la compréhension de laquelle on se reportera aux dessins annexés dans lesquels :
- la figure 1 est une vue en coupe axiale qui représente schématiquement une turbomachine ;
- la figure 2 est une vue en demi coupe axiale représentant un tronçon d'extrémité avant d'un turboréacteur qui est équipé d'un réducteur de vitesse et qui est équipé d'une paroi de refroidissement agencée selon les enseignements de l'invention ;
- la figure 3 est une vue en perspective représentant le tronçon d'extrémité avant de la figure 2 qui est muni d'un cône rotatif comportant des orifices de prélèvement d'air pour l'alimentation de la paroi de refroidissement.

### DESCRIPTION DETAILLEE DES FIGURES

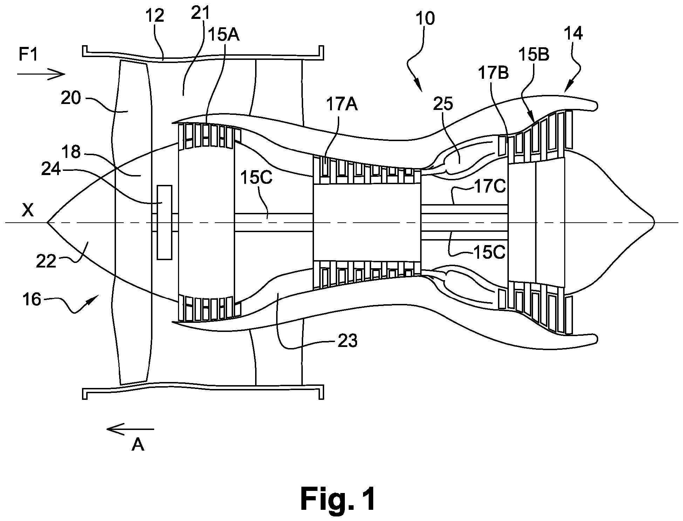

Dans la suite de la description, on adoptera de manière non limitative une orientation axiale "A" dirigée selon l'axe "X" de rotation de la turbomachine 10, et des orientations radiales dirigées depuis l'axe "X" de rotation de la turbomachine 10 vers l'extérieur. L'orientation axiale "A" est dirigée depuis l'arrière, à droite à la figure 1, vers l'avant, à gauche à la figure 1, l'air entrant par l'avant de la turbomachine 10 pour en ressortir par l'arrière.

Les termes "amont" et "aval" sont utilisés en référence au sens d'écoulement de l'air dans la conduite 32 d'air et dans les veines de la turbomachine.

On a représenté à la figure 1 une turbomachine 10. Il s'agit ici d'un turboréacteur à double flux utilisé pour la propulsion d'un aéronef.

Le moteur 14 est à double corps avec un premier corps basse pression et un second corps haute pression. Les deux corps sont montés rotatifs coaxialement autour de l'axe "X" central. Une telle architecture est bien connue de l'état de la technique.

Le corps basse pression comporte un compresseur 15A avant et une turbine 15B arrière qui sont liés en rotation autour de l'axe "X" par l'intermédiaire d'un premier arbre 15C axial central commun. De même, le corps haute pression comporte un compresseur 17A avant et une turbine 17B arrière qui sont liés en rotation autour de l'axe "X" par l'intermédiaire d'un deuxième arbre 17C axial central commun qui est creux. L'arbre 15C du corps basse pression est ici agencé concentriquement à l'intérieur de l'arbre 17C creux du corps haute pression.

Une soufflante 16 est montée en rotation autour de l'axe "X" central sur le moteur 14, en amont du compresseur 15A basse pression et dans un carter annulaire. La soufflante 16, aussi connue sous l'appellation "fan", comporte un moyeu 18 central portant une couronne d'aubes 20 qui s'étendent radialement vers l'extérieur.

La soufflante 16 comprime l'air incident F1 qui est réparti en aval entre une veine secondaire 21 et une veine primaire 23.

Le flux d'air circulant axialement dans la veine primaire 23 est comprimé par les étages successifs de compresseur 15A, 17A de la turbomachine 10 avant d'entrer dans une chambre 25 de combustion. L'énergie de combustion est transformée en énergie mécanique à travers les turbines 17B, 15B qui entraînent les compresseurs 15A, 17A et la soufflante 16. Le flux d'air circulant dans la veine secondaire 21 participe pour sa part à la poussée de la turbomachine 10.

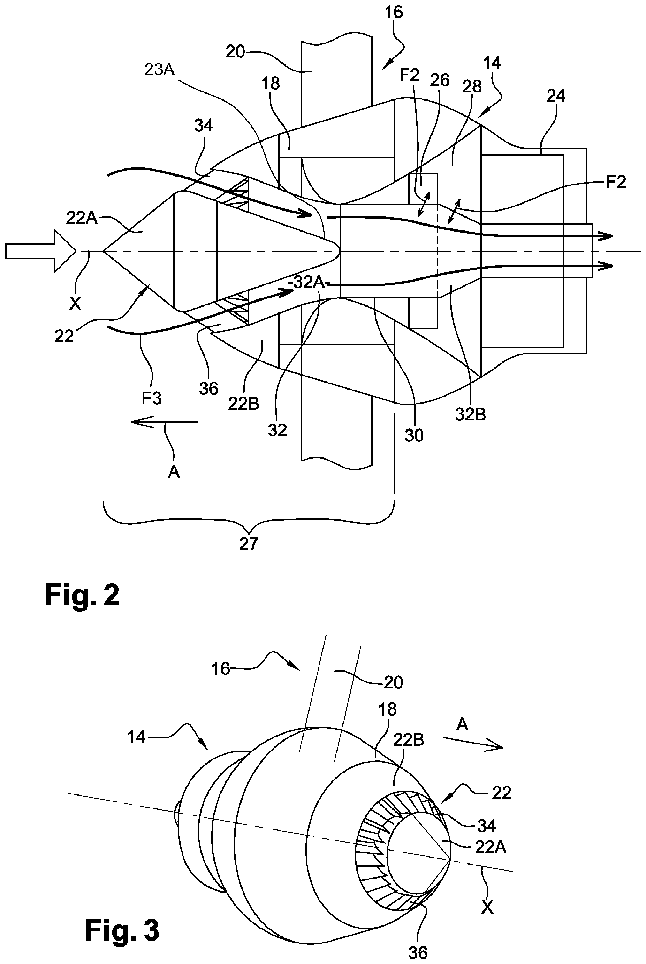

L'avant du moteur 14 a été représenté plus en détail à la figure 2. L'extrémité avant du moteur 14 est munie d'un cône 22 ou pièce conique d'extrémité avant qui est monté solidaire en rotation avec le moyeu 18 de la soufflante 16. Le cône 22 présente une forme axisymétrique d'axe "X" central, son sommet étant dirigé vers l'amont.

Le cône 22 d'extrémité avant et le moyeu 18 de la soufflante forment ainsi un rotor 27 de soufflante rotatif autour de l'axe "X".

La soufflante 16 est entraînée en rotation par la turbine 15B basse pression.

Pour permettre à la soufflante 16 de tourner plus lentement que le corps basse pression, le couple de rotation de la turbine 15B basse pression est transmis à la soufflante 16, via l'arbre 15C de compresseur 15A basse pression, par l'intermédiaire d'un réducteur 24 de vitesse, par exemple à train d'engrenages épicycloïdal. Le réducteur 24 de vitesse est agencé axialement entre la soufflante 16 et le compresseur 15A basse pression.

Dans le mode de réalisation représenté aux figures 2 et 3, un corps 29 axial d'extrémité amont comportant la soufflante 16, le réducteur 24 de vitesse et au moins un tronçon de l'arbre 15C du compresseur 15A basse pression forme un module qui est préassemblé indépendamment du reste du moteur 14 et qui est destiné à être assemblé ultérieurement avec d'autres modules du moteur 14 comportant notamment les ensembles rotatifs basse et haute pression et la chambre 25 de combustion.

Le réducteur 24 de vitesse est sollicité à très haute vitesse. Ceci provoque des échauffements très importants de ses divers composants. Il est donc prévu de refroidir ces composants par aspersion d'huile qui permet en outre de lubrifier le réducteur 24 de vitesse.

Dans l'exemple représenté aux figures, ladite huile est aussi utilisée pour la lubrification et le refroidissement d'autres éléments de la turbomachine 10, notamment pour des paliers 26 supportant une portion d'extrémité avant de l'arbre d'entraînement de la soufflante 16 comme représenté à la figure 2.

Les différents composants à lubrifier, notamment ceux du réducteur 24 de vitesse, sont contenus dans une enceinte 28 de la turbomachine 10. Cette enceinte 28 est conçue pour contenir l'huile de manière étanche, empêchant ainsi toute fuite d'huile dans le reste de la turbomachine 10. L'enceinte 28 d'huile est ici interposée axialement entre le moyeu 18 de la soufflante et le réducteur 24 de vitesse.

Cette enceinte 28 est en partie délimitée par une paroi 30, dite paroi 30 de refroidissement, qui forme une cloison de séparation entre l'intérieur de l'enceinte 28 et une conduite 32 d'air dite "conduite 32 de refroidissement". La conduite 32 de refroidissement est agencée à l'intérieur du moteur 14 à turbine à gaz. La conduite 32 de refroidissement est par exemple formée à l'intérieur de l'arbre d'entraînement du rotor 27 et/ou à l'intérieur de l'arbre 15C du compresseur 15A basse pression.

La paroi 30 de refroidissement est destinée à refroidir l'huile par conduction thermique entre un flux d'air froid circulant dans la conduite 32 de refroidissement au contact d'une première face de la dite paroi 30 de refroidissement, et l'huile contenue dans l'enceinte 28 au contact d'une deuxième face opposée de ladite paroi 30 de refroidissement, comme cela est illustré par les doubles-flèches "F2" de la figure 2.

Pour augmenter la surface d'échange thermique avec l'air, la face de la paroi 30 de refroidissement qui forme l'intérieur de la conduite 32 de refroidissement est hérissé d'ailettes (non représentées).

La paroi 30 de refroidissement est agencée axialement en arrière du cône 22.

Le refroidissement de l'huile nécessite un débit élevé d'air dans la conduite 32 de refroidissement. Pour éviter de provoquer des pertes de charge dans la veine 12 primaire, l'invention propose de prélever l'air en amont de la soufflante 16.

Ainsi, comme représenté à la figure 2, la conduite 32 de refroidissement est alimentée en air par au moins un orifice 34 amont de prélèvement d'air qui est agencé en avant du moyeu de la soufflante 16.

Un tronçon 32A d'extrémité amont de la conduite 32 de refroidissement traverse le rotor 27 de soufflante, en passant ainsi à travers le cône 22 d'extrémité puis à travers le moyeu 18 de la soufflante 16 pour guider le flux d'air jusqu'à la paroi 30 de refroidissement. Le tronçon 32A d'extrémité amont se prolonge ainsi axialement dans le corps 29 axial amont au-delà du rotor 27. Le tronçon 32A d'extrémité amont de la conduite 32 de refroidissement est ainsi délimité radialement par une paroi rotative autour de l'axe "X" du moteur 14 à turbine à gaz.

Le tronçon 32A d'extrémité amont de la conduite est équipé de moyens mécaniques d'entraînement de l'air. Les moyens d'entraînement sont situés en amont de la paroi 30 de refroidissement afin d'accélérer le flux d'air avant son arrivée au contact de la paroi 30 de refroidissement.

Dans l'exemple représenté aux figures, la conduite 32 de refroidissement est alimentée en air exclusivement par l'orifice 34 de prélèvement d'air.

En variante non représentée de l'invention, la conduite de refroidissement est alimentée en air prélevé en avant du moyeu de la soufflante, d'une part, et en air prélevé dans la veine primaire, d'autre part.

Dans l'exemple représenté aux figures 2 et 3, la conduite 32 de refroidissement comporte plus particulièrement un unique orifice 34 de prélèvement d'air qui est débouchant axialement vers l'avant dans le cône 22 d'extrémité du moteur 14 à turbine à gaz.

L'orifice 34 de prélèvement d'air présente ici une forme annulaire coaxiale à l'axe "X" de rotation de la soufflante 16. Ainsi, le cône 22 est divisé par l'orifice 34 de prélèvement en un tronçon 22A sommital avant et en un tronçon 22B tronconique arrière.

Dans un exemple non limitatif de réalisation de l'invention, on a estimé que pour une turbomachine 10 d'une puissance de 10 MW équipée d'un réducteur pour entraîner la soufflante, le débit d'air requis pour refroidir efficacement l'huile est d'environ 2 kg.s⁻¹. Pour que ce débit puisse être obtenu lors du décollage de l'aéronef, c'est à dire à une vitesse de déplacement d'air vers l'arrière relativement faible par rapport à la turbomachine 10, on a calculé que l'aire de l'orifice 34 de prélèvement d'air en section transversale devrait être inférieure à 10% de la surface du cône 22 d'extrémité avant.

Comme illustré à la figure 3, les moyens d'entraînement de l'air sont ici formés par une couronne d'aubes 36 radiales d'entraînement qui sont interposées dans le tronçon 32A d'extrémité amont de la conduite. Les aubes 36 sont solidaires en rotation avec le rotor 27 de soufflante pour permettre l'entraînement de l'air entrant lors de la rotation de la soufflante 16.

Les aubes 36 d'entraînement sont ici disposées dans le cône 22, directement en avant de l'orifice 34 annulaire de prélèvement, pour entraîner l'air dans la conduite 32 de refroidissement lors de la rotation de la soufflante 16. L'inclinaison des aubes 36 est déterminée en fonction du débit minimal d'air requis pour un refroidissement satisfaisant de l'huile par échange de chaleur à travers la paroi 30 de refroidissement.

A titre d'exemple, les aubes 36 sont dimensionnées pour avoir un effet aussi neutre que possible vis-à-vis de l'écoulement du flux d'air à une vitesse de croisière de l'aéronef, conférant tout au plus une giration de l'air.

Pour des vitesses de déplacement inférieures de l'aéronef, les aubes 36 permettent d'entraîner le flux d'air à l'intérieur de la conduite 32 de refroidissement, en lui conférant toutefois une giration plus importante.

Cette giration de l'air dans la conduite 32 de refroidissement permet avantageusement de produire une plus grande convection qui améliore le refroidissement de l'huile à travers la paroi 30 de refroidissement. Toutefois, cette giration doit être maîtrisée pour limiter les pertes de charge dans la conduite 32 de refroidissement.

Cet agencement des aubes 36 permet de fixer le tronçon 22A sommital avec le tronçon 22B tronconique du cône 22.

Cette configuration est avantageuse, car le tronçon 22A sommital du cône 22 permet d'empêcher des corps étrangers d'entrer par l'orifice 34 en les déviants.

Les aubes 36 de la couronne n'ont pas nécessairement toutes la même structure. Comme on l'a vu précédemment, l'agencement des aubes 36 permet de fixer le tronçon 22A sommital avec le tronçon 22B tronconique du cône 22, et pour cela il suffit que certaines aubes 36 seulement, c'est-à-dire au moins trois aubes 36, lient le tronçon sommital avant 22A au tronçon 22B tronconique, en étant par exemple formées d'un seul tenant avec les tronçons 22A sommital et 22B tronconique. Les autres aubes 36 peuvent par exemple présenter un profil plus fin sans être nécessairement solidaires simultanément des deux tronçons 22A sommital et 22B tronconique. Par exemple, de telles aubes 36 peuvent être montées de manière amovible dans l'orifice 34, en étant fixées au seul tronçon sommital 22A, et ce, de manière amovible, afin de permettre leur éventuel remplacement.

Dans cette configuration, le tronçon 32A d'extrémité amont de la conduite 32 de refroidissement présente ainsi un tronçon d'extrémité amont de section annulaire coaxiale à l'axe "X" de la turbomachine 10. Le tronçon 32A d'extrémité amont converge axialement vers l'aval pour déboucher dans un tronçon 32B d'extrémité aval présentant une section circulaire. Dans l'exemple représenté à la figure 2, la paroi 30 de refroidissement est agencée dans le tronçon 32B d'extrémité aval de la conduite 32 de refroidissement.

Le tronçon sommital 22A présente en aval une section 23A qui se rétrécit et qui présente par exemple une forme de cône. Cette configuration permet de ramener radialement l'air vers l'intérieur, c'est-à-dire vers l'axe "X" de la turbomachine 10, à proximité de la paroi 30 de refroidissement.

Le tronçon 32A d'extrémité amont de la conduite 32 de refroidissement compris entre l'orifice 34 de prélèvement et la paroi 30 de refroidissement est court et globalement rectiligne. Le flux d'air circulant dans la conduite 32 de refroidissement subit ainsi très peu de pertes de charge entre son entrée dans la conduite 32 de refroidissement et son passage au niveau de la paroi 30 de refroidissement.

Le tronçon 32B d'extrémité aval de la conduite 32 de refroidissement est rectiligne de section circulaire centrée sur l'axe "X". Ainsi, après son passage au contact de la paroi 30 de refroidissement, l'air r de refroidissement est évacué axialement vers l'arrière dans un arbre central creux de la turbomachine 10 jusqu'à un orifice aval (non représenté) de sortie à l'air libre. Ceci permet de conserver un débit de passage d'air élevé au niveau de la paroi 30 de refroidissement.

Le flux d'air circulant dans la conduite 32 de refroidissement s'écoule ainsi axialement d'amont en aval, comme indiqué par les flèches "F3" de la figure 2.

Lors du fonctionnement de la turbomachine 10, la soufflante 16 est entraînée en rotation. L'air froid entrant dans la conduite 32 de refroidissement est entraîné par les aubes 36 d'entraînement. Le flux d'air froid ainsi entraîné par les aubes 36 d'entraînement s'écoule axialement vers l'aval dans la conduite 32 de refroidissement jusqu'à la paroi 30 de refroidissement. La chaleur de l'huile chaude est transférée au flux d'air froid à travers la paroi 30 de refroidissement. Puis, le flux d'air ainsi réchauffé continu son écoulement dans la conduite 32 de refroidissement axialement vers l'arrière jusqu'à son évacuation à l'air libre.

La turbomachine 10 réalisée selon les enseignements de l'invention permet de faire circuler un débit d'air élevé dans la conduite 32 de refroidissement sans perturber l'écoulement d'air dans la veine 21 secondaire. Ceci permet ainsi de refroidir très efficacement l'huile.

L'agencement de l'orifice 34 de prélèvement d'air sur le cône 22 d'extrémité avant permet notamment de bénéficier d'air s'écoulant à une vitesse axiale importante, par exemple comprise entre 0.5 et 0.6 Mach, à son entrée dans l'orifice 34 de prélèvement d'air.

En outre, le cône 22 entraîne en rotation les aubes 36 pour aspirer l'air entrant dans la conduite 32 de refroidissement. La vitesse élevée d'entrée de l'air permet d'obtenir un débit d'air élevé dans la conduite 32 de refroidissement.

En outre, le tronçon amont de la conduite 32 de refroidissement est court et quasiment droit, ce qui permet d'éviter les pertes de charge du flux d'air entre l'orifice 34 d'entrée et la paroi 30 de refroidissement.

## Revendications

1. Rotor (27) de soufflante (16) de turbomachine (10) destiné à être monté rotatif autour d'un axe de rotation (X), le rotor (27) comportant:
- un moyeu (18), et
- un cône (22) monté en amont du moyeu (18) ;
le cône (22) comportant un orifice (34) de prélèvement d'air qui débouche dans une conduite (32) d'air dont un tronçon (32A) d'extrémité amont comprend des moyens mécaniques d'entraînement de l'air,
**caractérisé en ce que** l'orifice (34) de prélèvement d'air présente une forme annulaire coaxiale à l'axe (X) de rotation du rotor (27) de soufflante (16), le cône (22) étant divisé par l'orifice (34) de prélèvement en un tronçon (22A) sommital avant et en un tronçon (22B) tronconique arrière.

2. Rotor de soufflante (16) selon la revendication précédente, **caractérisé en ce que** le tronçon (22A) sommital est fixé avec le tronçon (22B) tronconique du cône (22) par les aubes (36).

3. Rotor (27) de soufflante (16) selon l'une des revendications précédentes, **caractérisé en ce que** le tronçon (32A) d'extrémité amont de la conduite (32) d'air présente une section de forme annulaire coaxiale à l'axe (X) de rotation du rotor (27) de soufflante (16), une couronne d'aubes (36) radiales étant interposée dans le tronçon (32A) d'extrémité amont, les aubes (36) étant solidaires en rotation avec le moyeu (18).

4. Rotor de soufflante (16) selon la revendication précédente, **caractérisée en ce que** la couronne d'aubes (36) est disposée dans ledit cône (22).

5. Rotor de soufflante (16) selon l'une quelconque des revendications précédentes, **caractérisée en ce que** la conduite (32) d'air est centrée sur l'axe (X) de rotation du rotor (27).

6. Corps axial amont (29) d'une turbomachine (10), notamment un turboréacteur multi flux, comportant un rotor (27) de soufflante (16) réalisé selon l'une quelconque des revendications précédentes, et au moins un tronçon d'un arbre (15C) de compresseur, **caractérisé en ce que** la conduite (32) d'air se prolonge dans le corps axial (29) amont au-delà du rotor (27) de soufflante, la conduite (32) d'air comportant au moins une paroi (30) de refroidissement d'huile qui est destinée à refroidir de l'huile par échange de chaleur à travers ladite paroi avec le flux d'air circulant dans la conduite (32) d'air.

7. Corps axial amont (29) selon la revendication précédente, **caractérisé en ce que** la paroi (30) de refroidissement est située en aval des moyens (36) mécaniques d'entraînement de l'air.

8. Corps axial amont (29) selon la revendication précédente, **caractérisé en ce que** le couple de rotation de l'arbre (15C) de compresseur est transmis au rotor (27) de la soufflante (16) par l'intermédiaire d'un réducteur (24) de vitesse placé dans le corps axial amont, le réducteur (24) de vitesse étant lubrifié par de l'huile refroidie au contact de ladite paroi (30) de refroidissement.

9. Turbomachine (10) comportant un corps axial amont (29) selon l'une quelconque des revendications 6 à 8, et au moins un arbre central creux, **caractérisé en ce que** la conduite (32) d'air débouche en aval dans l'arbre central creux, le flux d'air circulant dans la conduite (32) d'air étant évacué vers l'aval dans cet arbre central creux.

## Patentansprüche

1. Rotor (27) eines Gebläses (16) einer Turbomaschine (10), der dazu bestimmt ist, um eine Drehachse (X) drehbar befestigt zu werden, wobei der Rotor (27) Folgendes aufweist:
- eine Nabe (18) und
- einen Konus (22), der vorgelagert vor der Nabe (18) befestigt ist,
wobei der Konus (22) eine Öffnung (34) zur Entnahme von Luft aufweist, die in eine Luftleitung (32) mündet, wovon ein vorgelagerter Endabschnitt (32A) mechanische Luftantriebsmittel aufweist,
**dadurch gekennzeichnet, dass** die Öffnung (34) zur Entnahme von Luft eine ringförmige Form aufweist, die koaxial zu der Drehachse (X) des Rotors (27) eines Gebläses (16) ist, wobei der Konus (22) durch die Öffnung (34) zur Entnahme in einen vorderen Scheitelabschnitt (22A) und einen hinteren kegelstumpfförmigen Abschnitt (22B) unterteilt ist.

2. Rotor eines Gebläses (16) nach dem vorstehenden Anspruch, **dadurch gekennzeichnet, dass** der Scheitelabschnitt (22A) durch die Schaufeln (36) mit dem kegelstumpfförmigen Abschnitt (22B) des Konus (22) befestigt ist.

3. Rotor (27) eines Gebläses (16) nach einem der vorstehenden Ansprüche, **dadurch gekennzeichnet, dass** der vorgelagerte Endabschnitt (32A) der Luftleitung (32) einen ringförmigen Querschnitt aufweist, der zu der Drehachse (X) des Rotors (27) eines Gebläses (16) koaxial ist, wobei ein Kranz von radialen Schaufeln in dem vorgelagerten Endabschnitt (32A) eingefügt ist, wobei die Schaufeln (36) mit der Nabe (18) drehfest verbunden sind.

4. Rotor eines Gebläses (16) nach dem vorstehenden Anspruch, **dadurch gekennzeichnet, dass** der Kranz von radialen Schaufeln (36) in dem Konus (22) angeordnet ist.

5. Rotor eines Gebläses (16) nach einem der vorstehenden Ansprüche, **dadurch gekennzeichnet, dass** die Luftleitung (32) auf der Drehachse (X) des Rotors (27) zentriert ist.

6. Vorgelagerter axialer Körper (29) einer Turbomaschine (10), insbesondere eines Mehrkreis-Turbostrahltriebwerks, umfassend einen Rotor (27) eines Gebläses (16), der nach einem der vorstehenden Ansprüche erstellt ist, und mindestens einen Abschnitt einer Kompressorwelle (15C), **dadurch gekennzeichnet, dass** sich Luftleitung (32) in den vorgelagerten axialen Körper (29) über den Rotor (27) des Gebläses hinaus erstreckt, wobei die Luftleitung (32) mindestens eine Wand (30) zum Kühlen von Öl aufweist, die dazu bestimmt ist, das Öl durch Wärmeaustausch durch die Wand mit dem Luftstrom, der in der Luftleitung (32) zirkuliert, zu kühlen.

7. Vorgelagerter axialer Körper (29) nach dem vorstehenden Anspruch, **dadurch gekennzeichnet, dass** die Wand (30) zum Kühlen nachgelagert nach den mechanischen Luftantriebsmitteln (36) angeordnet ist.

8. Vorgelagerter axialer Körper (29) nach dem vorstehenden Anspruch, **dadurch gekennzeichnet, dass** das Drehmoment der Kompressorwelle (15C) über ein Untersetzungsgetriebe (24), das in dem vorgelagerten axialen Körper angeordnet ist, auf den Rotor (27) des Gebläses (16) übertragen wird, wobei das Untersetzungsgetriebe (24) durch das Öl geschmiert wird, das in Kontakt mit der Wand (30) zum Kühlen gekühlt wird.

9. Turbomaschine (10), umfassend einen vorgelagerten axialen Körper (29) nach einem der Ansprüche 6 bis 8 und mindestens eine zentrale Hohlwelle, **dadurch gekennzeichnet, dass** die Luftleitung (32) stromabwärts in die zentrale Hohlwelle mündet, wobei der Luftstrom, der in der Luftleitung (32) zirkuliert, in der Stromabwärtsrichtung in diese zentrale Hohlwelle abgeführt wird.

## Claims

1. Fan (16) rotor (27) of a turbine engine, which is intended to be mounted so as to rotate about an axis of rotation (X), the rotor (27) comprising:
- a hub (18), and
- a cone (22) which is mounted upstream of the hub (18);
the cone (22) comprising an air take-off opening (34) which opens into an air channel (32), an upstream end portion (32A) of which comprises mechanical means for driving the air, **characterised in that** the air take-off opening (34) has an annular shape which is coaxial to the axis of rotation (X) of the fan (16) rotor (27), the cone (22) being divided by the take-off opening (34) into a front summit portion (22A) and a rear frustoconical portion (22B).

2. Fan (16) rotor according to the preceding claim, **characterised in that** the summit portion (22A) is attached to the frustoconical portion (22B) of the cone (22) by the blades (36).

3. Fan (16) rotor (27) according to either of the preceding claims, **characterised in that** the upstream end portion (32A) of the air channel (32) has an annular cross section which is coaxial to the axis of rotation (X) of the fan (16) rotor (27), a ring of radial blades (36) being interposed in the upstream end portion (32A), the blades (36) being connected to the hub (18) for conjoint rotation.

4. Fan (16) rotor according to the preceding claim, **characterised in that** the ring of blades (36) is arranged in said cone (22).

5. Fan (16) rotor according to any of the preceding claims, **characterised in that** the air channel (32) is centred on the axis of rotation (X) of the rotor (27).

6. Upstream axial body (29) of a turbine engine (10), in particular a multi-flow turbojet engine, comprising a fan (16) rotor (27) which is produced according to any of the preceding claims, and at least one portion of a compressor shaft (15C), **characterised in that** the air channel (32) extends in the upstream axial body (29) beyond the fan rotor (27), the air channel (32) comprising at least one oil-cooling wall (30) which is intended to cool oil by exchanging heat through said wall with the air flow circulating in the air channel (32).

7. Upstream axial body (29) according to the preceding claim, **characterised in that** the cooling wall (30) is located downstream of the mechanical means (36) for driving the air.

8. Upstream axial body (29) according to the preceding claim, **characterised in that** the rotational torque of the compressor shaft (15C) is transmitted to the rotor (27) of the fan (16) by means of a speed reduction gear (24) which is placed in the upstream axial body, the speed reduction gear (24) being lubricated by oil which is cooled through contact with said cooling wall (30).

9. Turbine engine (10) comprising an upstream axial body (29) according to any of claims 6 to 8, and at least one hollow central shaft, **characterised in that** the air channel (32) opens downstream into the hollow central shaft, the air flow circulating in the air channel (32) being discharged downstream into said hollow central shaft.
